# EUROPÄISCHE PATENTSCHRIFT

(11) **EP 2 885 156 B1**
(45) Veröffentlichungstag und Bekanntmachung des Hinweises auf die Patenterteilung: **30.12.2015**
(21) Anmeldenummer: 13753303.0
(22) Anmeldetag: 14.08.2013
(51) Int. Cl.: B60N 2/16, B60N 2/50

(54) **FAHRZEUGSITZ**
VEHICLE SEAT
SIÉGE DE VEHICULE

(30) Priorität: 14.08.2012 DE 102012016230; 26.09.2012 DE 102012019574
(43) Veröffentlichungstag der Anmeldung: 24.06.2015
(73) Patentinhaber: Johnson Controls Components GmbH & Co. KG, 67657 Kaiserslautern (DE)
(72) Erfinder: GUNDALL, Thomas, 66851 Queidersbach (DE); REICHEL, Uwe, 66879 Kottweiler-Schwanden (DE); VOGT, Adolf, 67821 Alsenz (DE)
(86) Internationale Anmeldenummer: PCT/EP2013/066955
(87) Internationale Veröffentlichungsnummer: WO 2014/027010

(56) Entgegenhaltungen:
- DE-B4-102006 059 088
- DE-U1-202005 021 119

## Beschreibung

Die Erfindung betrifft einen Fahrzeugsitz, insbesondere einen Nutzfahrzeugsitz, mit den Merkmalen des Oberbegriffs des Anspruchs 1.

### Stand der Technik

Aus der DE 10 2006 059 088 B4 ist ein gattungsgemäßer Fahrzeugsitz bekannt, welcher mittels eines Scherengestells höheneinstellbar ist.

Das Scherengestell umfasst dabei einen Unterrahmen, einen oberhalb desselben angeordneten Oberrahmen und beidseitig je ein Paar gekreuzter Schwingen. Die Schwingen des Scherengestells sind dabei paarweise mittels mehrerer Querrohre miteinander verbunden. Im hinteren Bereich des Fahrzeugsitzes sind die Schwingen mittels der Querrohre an dem Unterrahmen sowie an dem Oberrahmen angelenkt.

Im vorderen Bereich des Fahrzeugsitzes sind Lagervorrichtungen vorgesehen, mittels denen die Schwingen in dem Oberrahmen sowie in dem Unterrahmen in Längsrichtung beweglich geführt sind. Die Lagervorrichtungen weisen dabei je zwei drehbare Rollen auf, welche mit Führungen in dem Oberrahmen sowie in dem Unterrahmen zusammenwirken.

Bei einer Höhenänderung des Scherengestells laufen die Rollen auf entsprechenden Führungen im Oberrahmen sowie im Unterrahmen in Längsrichtung. Dabei läuft je einer der Rollen einer Lagervorrichtung auf einer oberen Führung und die andere der Rollen läuft auf einer unteren Führung.

Ein gattungsgemäßer Fahrzeugsitz ist auch aus der US 6,200,032 B1 bekannt. Zum Reduzierung des Spiels, insbesondere in Vertikalrichtung, sind dabei zwei Rollen mit verschiedenen Durchmessern vorgesehen, wobei die innen gelegene Rolle einen größeren Durchmesser aufweist als die außen gelegene Rolle.

Ein weiterer gattungsgemässer Fahrzeugsitz ist aus dem Dokument DE202005021119U bekannt.

### Aufgabe

Der Erfindung liegt die Aufgabe zu Grunde, einen Fahrzeugsitz der eingangs genannten Art zu verbessern, insbesondere eine alternative Ausgestaltung zur Spielreduzierung anzugeben.

### Lösung

Diese Aufgabe wird erfindungsgemäß durch einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Ein gattungsgemäßer Fahrzeugsitz, insbesondere ein Nutzfahrzeugsitz, umfasst ein Scherengestell zur Höheneinstellung, welches gekreuzte Schwingen und mindestens einen Rahmen aufweist, sowie mindestens eine Lagervorrichtung, mittels welcher mindestens eine der Schwingen in dem Rahmen beweglich geführt ist, wobei die Lagervorrichtung eine um eine Lagerachse drehbare Lastrolle, welche mit einer ersten Führung zusammenwirkt, und eine um die Lagerachse drehbare Ausgleichsrolle, welche mit einer zweiten Führung zusammenwirkt, aufweist.

Erfindungsgemäß ist dabei vorgesehen, dass die zweite Führung für die Ausgleichsrolle an einem Fußbereich eines Einlegers angebracht ist, und dass ein Seitenbereich des Einlegers, welcher sich rechtwinklig zu dem Fußbereich erstreckt, an dem Rahmen befestigt ist, und/oder dass ein Kopfbereich des Einlegers, welcher sich parallel zu dem Fußbereich erstreckt, an dem Rahmen befestigt ist, und dass der Fußbereich elastisch verformbar ausgebildet ist und gegen die Ausgleichsrolle drückt.

Der Fußbereich drückt dabei aufgrund seiner Elastizität und einer Vorspannung mit der zweiten Führung gegen die Ausgleichsrolle, wodurch die Lastrolle gegen die erste Führung gedrückt wird. Dadurch ist zwischen den Führungen und der Lastrolle sowie der Ausgleichsrolle vorhandenes Spiel reduziert, beziehungsweise eliminiert.

Eine einfache Montage des Einlegers ergibt sich, wenn der Rahmen ein zum Inneren des Fahrzeugsitzes hin offenes C-Profil aufweist, welches einen oberen Schenkel, einen parallel zu dem oberen Schenkel verlaufenden unteren Schenkel und einen rechtwinklig zu dem oberen Schenkel verlaufenden Basisschenkel, welcher den oberen Schenkel mit dem unteren Schenkel verbindet, umfasst, wobei der Seitenbereich an dem Basisschenkel befestigt, vorzugsweise verschweißt ist und/oder der Kopfbereich an dem oberen Schenkel befestigt, vorzugsweise verschweißt ist.

Der Einleger weist dazu vorzugsweise ebenfalls ein offenes C-Profil auf, wodurch die Montage noch weiter vereinfacht ist.

Dabei bildet der Kopfbereich des Einlegers vorteilhaft die erste Führung für die Lastrolle.

Die Ausrichtung des Einlegers bei der Montage an dem Rahmen ist dadurch vereinfacht, dass der Kopfbereich parallel zu dem oberen Schenkel verläuft und an dem oberen Schenkel dicht anliegt.

Vorteilhaft ist der Fußbereich parallel oder zumindest weitgehend parallel zu dem unteren Schenkel angeordnet, wobei zwischen dem Fußbereich und dem unteren Schenkel ein Spalt vorgesehen ist. Dadurch ist eine elastische Verformung des Fußbereichs in Richtung auf den unteren Schenkel zu, ebenso wie in Richtung von dem unteren Schenkel weg, möglich.

Gemäß einer vorteilhaften Ausgestaltung der Erfindung umfasst der Fußbereich einen ersten Abschnitt, der an den Seitenbereich anschließt, und einen zweiten Abschnitt, der dem Seitenbereich abgewandt ist, wobei der zweite Abschnitt in Form einer Prägestufe ausgebildet ist und parallel versetzt zu dem ersten Abschnitt angeordnet ist. Die Prägestufe stellt dabei den erforderlichen Abstand zwischen dem ersten Abschnitt und der Lastrolle sicher um eine Berührung des Fußbereichs mit der Lastrolle zu vermeiden.

Vorzugsweise bildet dabei der zweite Abschnitt auch die zweite Führung für die Ausgleichsrolle.

Gemäß einer weiteren vorteilhaften Ausgestaltung der Erfindung ist auf dem Fußbereich eine Auflage aufgebracht, welche die zweite Führung für die Ausgleichsrolle bildet. Die Auflage stellt in diesem Fall den erforderlichen Abstand zwischen dem ersten Abschnitt und der Lastrolle sicher, um eine Berührung des Fußbereichs mit der Lastrolle zu vermeiden.

Vorzugsweise besteht der Einleger aus Metall, vorzugsweise aus Stahl. Dies ermöglicht ein Verschweißen des Einlegers mit dem Rahmen und gibt dem Fußbereich gleichzeitig die erforderliche Elastizität.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:

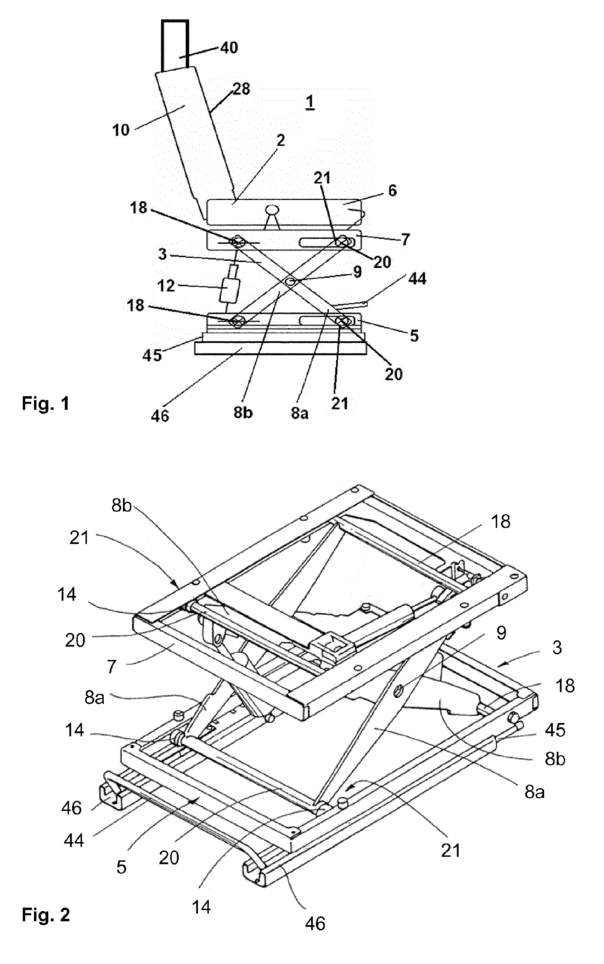

- Fig. 1:: eine schematische Darstellung eines Fahrzeugsitzes,
- Fig. 2:: eine perspektivische Darstellung eines Fahrzeugsitzes ohne Sitzteil,
- Fig. 3:: einen Schnitt durch eine Lagervorrichtung gemäß einem ersten Ausführungsbeispiel senkrecht zur Längsrichtung,
- Fig. 4:: eine Frontalansicht einer Lagervorrichtung gemäß dem ersten Ausführungsbeispiel in Längsrichtung gesehen,
- Fig. 5:: einen Schnitt durch eine Lagervorrichtung gemäß einem zweiten Ausführungsbeispiel senkrecht zur Längsrichtung,
- Fig. 6:: eine Frontalansicht einer Lagervorrichtung gemäß dem zweiten Ausführungsbeispiel in Längsrichtung gesehen,
- Fig. 7:: einen Schnitt durch eine Lagervorrichtung gemäß einem dritten Ausführungsbeispiel senkrecht zur Längsrichtung,
- Fig. 8:: eine Frontalansicht einer Lagervorrichtung gemäß dem dritten Ausführungsbeispiel in Längsrichtung gesehen,
- Fig. 9:: eine perspektivische Darstellung einer Lagervorrichtung gemäß dem dritten Ausführungsbeispiel und

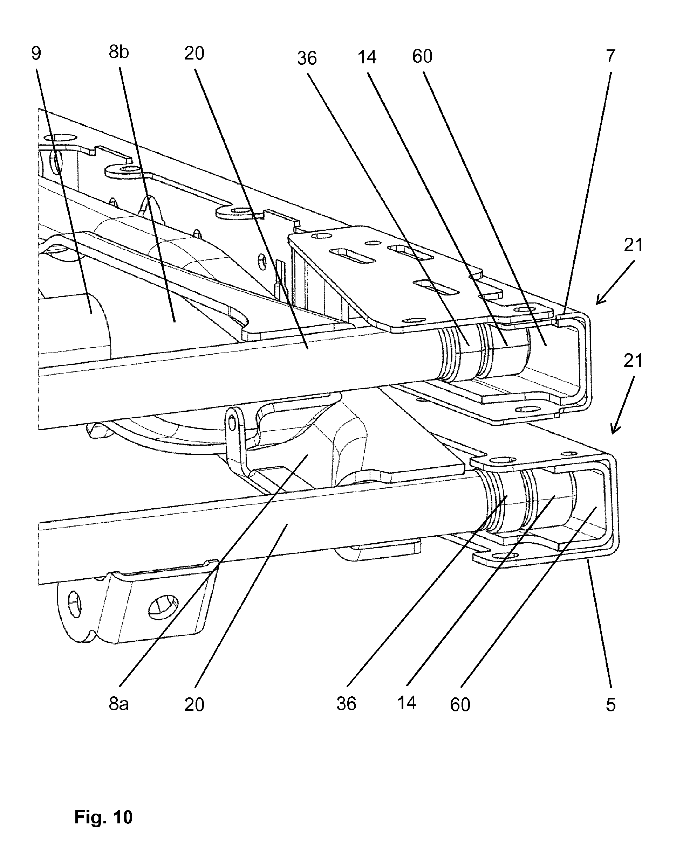

- Fig. 10:: eine perspektivische Darstellung zweier Lagervorrichtungen an Ober- und Unterrahmen eines Fahrzeugsitzes.

Ein Fahrzeugsitz 1 für ein Nutzfahrzeug weist ein Scherengestell 3 auf, welches einen Unterrahmen 5, einen oberhalb desselben angeordneten Oberrahmen 7 und beidseitig je ein Paar gekreuzter erster Schwingen 8a und zweiter Schwingen 8b umfasst. Ein Querrohr 9 verbindet die beiden Kreuzungspunkte und definiert zugleich eine Scherenachse, um welche die Schwingen 8a und 8b relativ zueinander schwenken können.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die ersten Schwingen 8a sind an ihren hinteren Enden mittels eines Halterrohrs 18 miteinander verbunden und an dem Oberrahmen 7 angelenkt. An ihren vorderen Enden sind die ersten Schwingen 8a mittels eines Lagerrohrs 20 verbunden und beidseitig mittels je einer Lagervorrichtung 21 in dem Unterrahmen 5 in Längsrichtung, welche annähernd der Fahrtrichtung entspricht, beweglich geführt.

Die zweiten Schwingen 8b sind an ihren hinteren Enden mittels eines Halterrohrs 18 miteinander verbunden und an dem Unterrahmen 5 angelenkt. An ihren vorderen Enden sind die zweiten Schwingen 8b ebenfalls mittels eines Lagerrohrs 20 verbunden und beidseitig mittels je einer Lagervorrichtung 21 in dem Oberrahmen 7 in Längsrichtung beweglich geführt.

Das Querrohr 9, die Lagerrohre 20 und die Halterohre 18 erstrecken sich vorliegend in Querrichtung, ebenso wie die Scherenachse. Durch eine Schwenkbewegung der ersten Schwingen 8a relativ zu den zweiten Schwingen 8b um die Scherenachse ändert sich die Höhe des Oberrahmens 7 über dem Unterrahmen 5, im Folgenden kurz als Höhe des Scherengestells 3 bezeichnet. Mittels einer Gasfeder 12 und vorzugsweise einem hier nicht dargestellten Dämpfer wird das Scherengestell 3 ein schwingfähiges System, welches den Sitzkomfort maßgeblich erhöht.

Der Fahrzeugsitz 1 weist ferner einen Sitzrahmen 6 auf, welcher einerseits in seinem hinteren Bereich am Oberrahmen 7 beidseitig angelenkt ist und andererseits in seinem vorderen Bereich mittels eines Neigungseinstellers anhebbar und absenkbar und damit in seiner Neigung relativ zum Scherengestell 3 einstellbar ist.

Der Fahrzeugsitz 1 weist auch eine Rückenlehne 10 auf, welche an dem Sitzrahmen 6 vorliegend neigungseinstellbar angebracht ist. Alternativ ist die Rückenlehne 10 auch an dem Oberrahmen 7 anbringbar. Die Rückenlehne 10 ist mit einem Bezug 28 überzogen. In einem in Vertikalrichtung oberen Bereich der Rückenlehne 10 ist eine Kopfstütze 40 vorgesehen. Die Rückenlehne 10 und der Sitzrahmen 6, welcher ein Sitzkissen umfasst, bilden ein Sitzteil 2.

Das Sitzteil 2 ist, gemeinsam mit dem Scherengestell 3, mittels zweier Schienenpaare verschiebbar, womit der Fahrzeugsitz 1 translatorisch in Längsrichtung, welche annähernd der Fahrtrichtung entspricht, einstellbar ist. Die beiden Schienenpaare sind dabei in Querrichtung zueinander versetzt und parallel zueinander angeordnet. Die beiden Schienenpaare sind im Wesentlichen identisch aufgebaut.

Jedes Schienenpaar umfasst eine erste Sitzschiene 45, welche auch als Oberschiene bezeichnet wird, und eine zweite Sitzschiene 46, welche auch als Unterschiene bezeichnet wird. Die zweite Sitzschiene 46 ist vorliegend fest mit der Struktur des Fahrzeugs verbunden und die erste Sitzschiene 45 ist fest mit dem Unterrahmen 5 des Fahrzeugsitzes 1 verbunden. Alternativ ist es denkbar, die zweite Sitzschiene 46 mittels eines Adapters oder einer Konsole mit der Struktur des Fahrzeugs zu verbinden. Weiterhin ist es denkbar, die erste Sitzschiene 45 mittels eines Adapters mit dem Unterrahmen 5 des Fahrzeugsitzes 1 zu verbinden.

Die erste Sitzschiene 45 ist dabei relativ zu der zweiten Sitzschiene 46 beweglich in dieser geführt. Mittels einer Verriegelungsvorrichtung ist die erste Sitzschiene 45 mit der zweiten Sitzschiene 46 verriegelbar. Eine Entriegelungseinheit, welche einen Entriegelungsbügel 44 umfasst, dient zum Entriegeln der Verriegelungsvorrichtung.

Der Entriegelungsbügel 44 ist in einem in Fahrtrichtung, beziehungsweise in Längsrichtung, vorderen Bereich des Fahrzeugsitzes 1 angeordnet und um eine vorliegend in Querrichtung verlaufende Schwenkachse schwenkbar gelagert. Durch Zug an dem Entriegelungsbügel 44 in Vertikalrichtung nach oben wird dieser um die Schwenkachse geschwenkt, wodurch die Verriegelungsvorrichtung entriegelt wird.

Der Entriegelungshebel 44 und die Schwenkachse sind dabei kinematisch dem Unterrahmen 5 sowie der ersten Sitzschiene 45 zugeordnet. Das bedeutet, bei einer Verschiebung des Sitzteils 2 in Längsrichtung bewegt sich der Entriegelungshebel 44 entsprechend mit, jedoch nicht bei einer Änderung der Höhe des Scherengestells 3, also bei einer Bewegung des Sitzteils 2 in Vertikalrichtung.

Die in Längsrichtung verlaufenden Teile des Oberrahmens 7 sowie des Unterrahmens 5 weisen je ein zum Inneren des Fahrzeugsitzes 1 hin offenes C-Profil auf. Jede Lagervorrichtung 21 weist eine Lastrolle 14 auf, welche um eine in Querrichtung verlaufende Lagerachse 16 drehbar gelagert ist und welche in ein offenes C-Profil des Oberrahmens 7 oder des Unterrahmens 5 ragt.

Das C-Profil des Oberrahmens 7 sowie das C-Profil des Unterrahmens 5 umfassen je einen oberen Schenkel 30 sowie einen unteren Schenkel 32, welcher in Vertikalrichtung unterhalb des oberen Schenkels angeordnet ist. Der obere Schenkel 30 und der untere Schenkel 32 verlaufen parallel zueinander und sind durch einen Basisschenkel 34, welcher sich rechtwinklig dazu erstreckt, miteinander verbunden. Somit bilden der obere Schenkel 30, der untere Schenkel 32 und der Basisschenkel 34 im Querschnitt ein C-Profil.

Die Lastrolle 14 der Lagervorrichtung 21 ist dabei auf einer zylindrischen Lager-welle 24 drehbar gelagert. Die Lagerwelle 24 ist mit dem Lagerrohr 20 fest verbunden, wobei die Mittelachsen des Lagerrohres 20 und der Lagerwelle 24 miteinander fluchten und die Lagerachse 16 der Lastrolle 14 bilden. Die Lastrolle 14 ist vorliegend annähernd zylindrisch ausgebildet.

Ferner ist eine Ausgleichsrolle 36 auf der zylindrischen Lagerwelle 24 um die Lagerachse 16 drehbar gelagert. Auch die Ausgleichsrolle 36 ist vorliegend annähernd zylindrisch ausgebildet. Die Ausgleichsrolle 36 hat vorliegend den gleichen Durchmesser wie die Lastrolle 14.

Vorliegend ist die Lastrolle 14 in Querrichtung außen auf der Lagerwelle 24 angeordnet, also dem Basisschenkel 34 des C-Profils zugewandt. Die Ausgleichsrolle 36 ist in Querrichtung innen auf der Lagerwelle 24 angeordnet, also dem Lagerrohr 20 zugewandt.

Innerhalb der C-Profile des Oberrahmens 7 sowie des Unterrahmens 5 sind jeweils Einleger 60 eingebracht, welche ebenfalls einen annähernd C-förmigen Querschnitt aufweisen. Jeder Einleger 60 weist dabei einen Kopfbereich 50, einen Fußbereich 52 und einen Seitenbereich 54 auf, welcher mit dem Kopfbereich 50 und dem Fußbereich 52 verbunden ist. Der Kopfbereich 50 ist dabei parallel zu dem oberen Schenkel 30 angeordnet, der Fußbereich 52 ist weitgehend parallel zu dem unteren Schenkel 32 angeordnet und der Seitenbereich 54 ist parallel zu dem Basisschenkel 34 des C-Profils angeordnet.

Der Kopfbereich 50 liegt dicht an dem oberen Schenkel 30 an, während zwischen dem Fußbereich 52 und dem unteren Schenkel 32 ein Spalt vorgesehen ist. Der Seitenbereich 54 ist mit dem Basisschenkel 34 des C-Profils verschweißt, vorliegend mittels Laser-Schweißen.

Der Fußbereich 52 umfasst einen ersten Abschnitt 62, welcher an den Seitenbereich 54 anschließt, und einen zweiten Abschnitt 64, welcher an den ersten Abschnitt 62 anschließt und dem Seitenbereich 54 abgewandt ist. Der erste Abschnitt 62 und der Kopfbereich 50 sind dabei in Vertikalrichtung annähernd gegenüberliegend angeordnet und einander zugewandt.

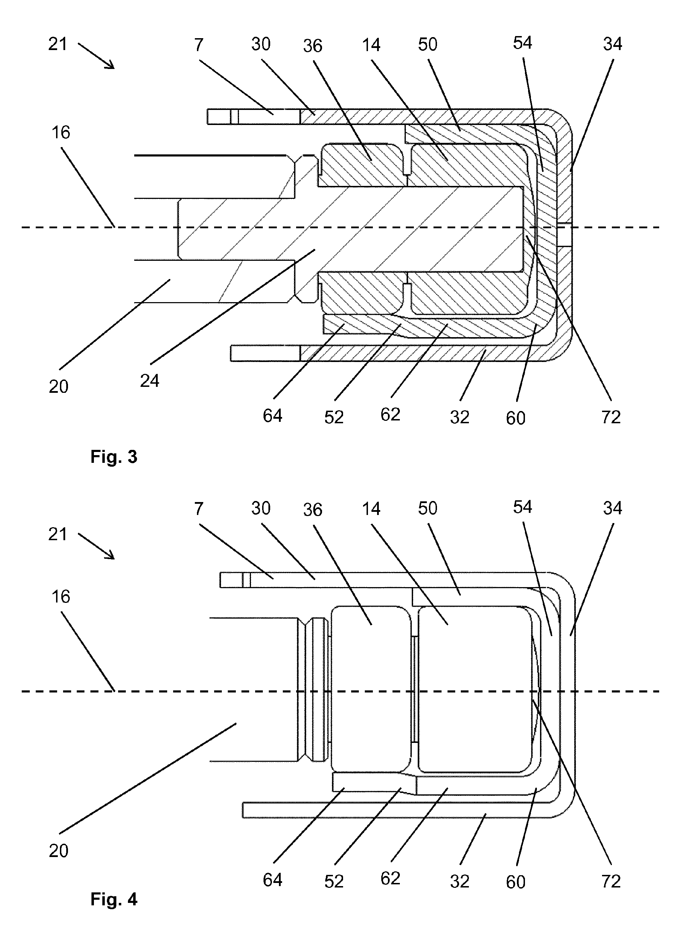

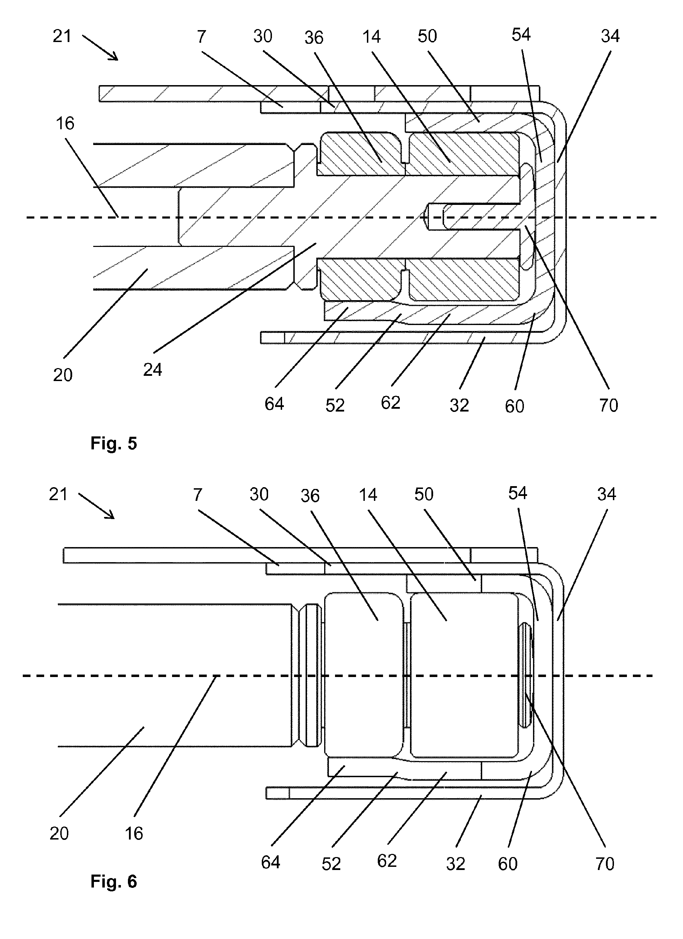

Gemäß einem in Fig. 3 und Fig. 4 dargestellten ersten Ausführungsbeispiel und gemäß einem in Fig. 5 und Fig. 6 dargestellten zweiten Ausführungsbeispiel ist der zweite Abschnitt 64 in Form einer Prägestufe ausgebildet und liegt annähernd parallel in Vertikalrichtung versetzt zu dem ersten Abschnitt 62. Dabei befindet sich der erste Abschnitt 62 näher an dem unteren Schenkel 32 als der zweite Abschnitt 64.

Der Kopfbereich 50 bildet eine erste Führung für die Lastrolle 14 und der zweite Abschnitt 64 des Fußbereichs 52 bildet eine zweite Führung für die Ausgleichsrolle 36. Durch die Form der Prägestufe ist sichergestellt, dass die Ausgleichsrolle 36 in Kontakt mit dem zweiten Abschnitt 64 des Fußbereichs 52 steht, während die Lastrolle 14 in vertikaler Richtung von dem ersten Abschnitt 62 des Fußbereichs 52 beabstandet ist.

Der Einleger 60 besteht vorliegend aus Stahl und ist somit elastisch. Insbesondere ist der Fußbereich 52 elastisch und wirkt daher ähnlich wie eine Feder. Dabei drückt der zweite Abschnitt 64 in Vertikalrichtung nach oben gegen die Ausgleichsrolle 36. Dabei wird die Lastrolle 14 nach oben gegen den Kopfbereich 50 gedrückt.

So ist sichergestellt, dass die Ausgleichsrolle 36 und die Lastrolle 14 ständig Kontakt mit den entsprechenden Führungen haben und an der ersten Führung sowie an der zweiten Führung anliegen. Dadurch sind Bauteiltoleranzen ausgleichbar und Spiel in Vertikalrichtung wird eliminiert.

Zum Spielausgleich in Querrichtung dient gemäß dem in Fig. 3 und Fig. 4 dargestellten ersten Ausführungsbeispiel eine an der Lastrolle 14 angebrachte Verbreiterung 72. Die Verbreiterung 72 befindet sich dabei an der dem Seitenbereich 54 des Einlegers 60 zugewandten Stirnseite der Lastrolle 14 und ragt in Querrichtung über die restliche Lastrolle 14 hinaus. Die Verbreiterung 72 liegt dabei an dem Seitenbereich 54 des Einlegers 60 an. Die Verbreiterung 72 ist vorliegend als kugelabschnittförmige Überhöhung der Stirnseite der Lastrolle 14 ausgebildet. Auch andere Ausgestaltungen sind denkbar.

Gemäß dem in Fig. 5 und Fig. 6 dargestellten zweiten Ausführungsbeispiel ist zum Spielausgleich in Querrichtung ein Gleitelement 70 vorgesehen, welches in eine in Querrichtung verlaufende Lagerbohrung in der Lagerwelle 24 eingeschoben ist. Das Gleitelement 70 liegt dabei an dem Seitenbereich 54 des Einlegers 60 an.

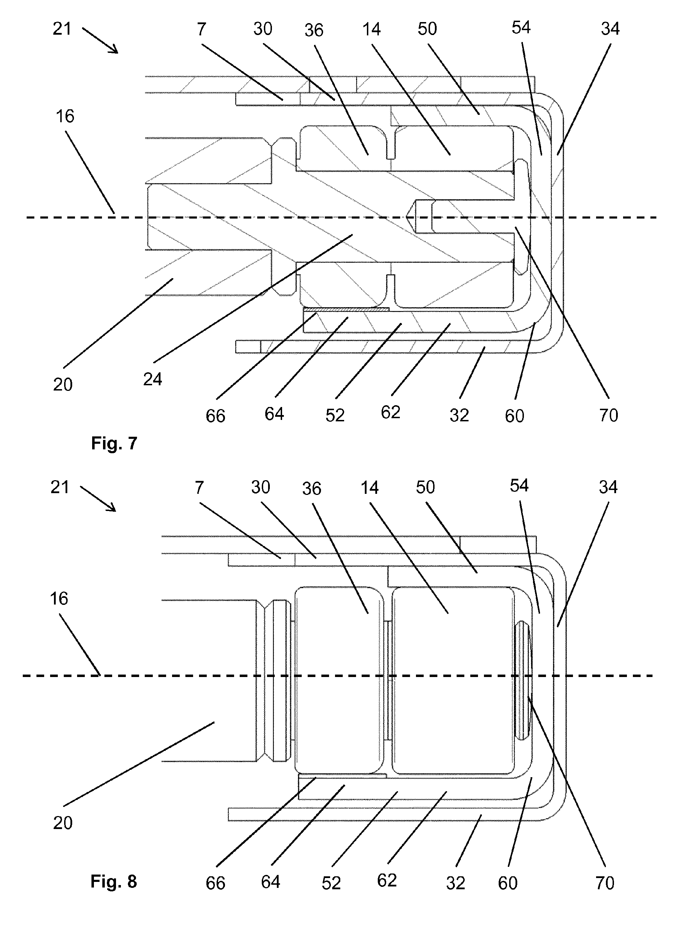

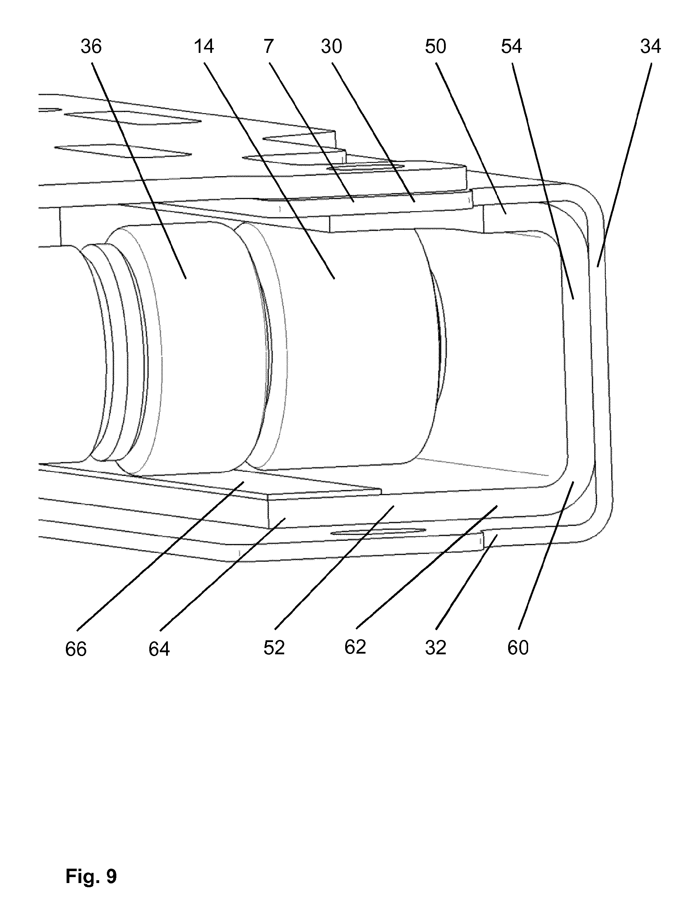

Gemäß einem in Fig. 7, Fig. 8 und Fig. 9 dargestellten dritten Ausführungsbeispiel schließt der zweite Abschnitt 64 geradlinig an den ersten Abschnitt 62 an. Auf dem zweiten Abschnitt 64 des Fußbereichs 52 ist eine Auflage 66 aufgebracht, vorliegend aufgeklebt, welche die zweite Führung für die Ausgleichsrolle 36 bildet, während der Kopfbereich 50 die erste Führung für die Lastrolle 14 bildet. Durch die Auflage 66 ist sichergestellt, dass die Ausgleichsrolle 36 in Kontakt mit der zweiten Führung steht, während die Lastrolle 14 in vertikaler Richtung von dem ersten Abschnitt 62 des Fußbereichs 52 beabstandet ist.

Die zweite Auflage 66 besteht vorliegend aus einem harten, nicht elastischen oder wenig elastischen Kunststoff. Es ist auch denkbar, dass die Auflage 66 aus einem elastischen Material, beispielsweise Gummi, besteht.

Auch bei dem dritten Ausführungsbeispiel besteht der Einleger 60 aus Stahl und ist somit elastisch. Insbesondere ist der Fußbereich 52 elastisch und wirkt daher ähnlich wie eine Feder. Dabei drückt der zweite Abschnitt 64 mit der Auflage 66 in Vertikalrichtung nach oben gegen die Ausgleichsrolle 36. Dabei wird die Lastrolle 14 nach oben gegen den Kopfbereich 50 gedrückt.

So ist auch bei dem dritten Ausführungsbeispiel sichergestellt, dass die Ausgleichsrolle 36 und die Lastrolle 14 ständig Kontakt mit den entsprechenden Führungen haben und an der ersten Führung sowie an der zweiten Führung anliegen. Dadurch sind Bauteiltoleranzen ausgleichbar und Spiel in Vertikalrichtung wird eliminiert.

Zum Spielausgleich in Querrichtung dient gemäß dem in Fig. 7, Fig. 8 und Fig. 9 dargestellten dritten Ausführungsbeispiel ein Gleitelement 70, welches in eine in Querrichtung verlaufende Lagerbohrung in der Lagerwelle 24 eingeschoben ist und an dem Seitenbereich 54 des Einlegers 60 anliegt, ähnlich wie bei dem in Fig. 5 und Fig. 6 dargestellten zweiten Ausführungsbeispiel.

Es ist auch denkbar, zum Spielausgleich in Querrichtung, ähnlich wie bei dem in Fig. 3 und Fig. 4 dargestellten ersten Ausführungsbeispiel, an der Lastrolle 14 eine Verbreiterung anzubringen, welche sich an der dem Seitenbereich 54 des Einlegers 60 zugewandten Stirnseite der Lastrolle 14 befindet und in Querrichtung über die restliche Lastrolle 14 hinaus ragt. Die Verbreiterung liegt dann an dem Seitenbereich 54 des Einlegers 60 an.

Bei den hier beschriebenen Ausführungsbeispielen entsprechen die Lagervorrichtungen 21, welche mit dem Unterrahmen 5 zusammen wirken, in Aufbau und Funktion den hier beschriebenen Lagervorrichtungen 21 an dem Oberrahmen 7. In Fig. 7 ist ein Teil eines Fahrzeugsitzes mit Lagervorrichtungen 21 am Oberrahmen 7 und am Unterrahmen 5 dargestellt.

### Bezugszeichenliste

- 1: Fahrzeugsitz
- 2: Sitzteil
- 3: Scherengestell
- 5: Unterrahmen
- 6: Sitzrahmen
- 7: Oberrahmen
- 8a: erste Schwinge
- 8b: zweite Schwinge
- 9: Querrohr
- 10: Rückenlehne
- 12: Gasfeder
- 14: Lastrolle
- 16: Lagerachse
- 18: Halterohr
- 20: Lagerrohr
- 21: Lagervorrichtung
- 24: Lagerwelle
- 28: Bezug
- 30: oberer Schenkel
- 32: unterer Schenkel
- 34: Basisschenkel
- 36: Ausgleichsrolle
- 40: Kopfstütze
- 44: Entriegelungshebel
- 45: erste Sitzschiene
- 46: zweite Sitzschiene
- 50: Kopfbereich
- 52: Fußbereich
- 54: Seitenbereich
- 60: Einleger
- 62: erster Abschnitt
- 64: zweiter Abschnitt
- 66: Auflage
- 70: Gleitelement
- 72: Verbreiterung

## Patentansprüche

1. Fahrzeugsitz (1), insbesondere Nutzfahrzeugsitz, umfassend
ein Scherengestell (3) zur Höheneinstellung, welches gekreuzte Schwingen (8a, 8b) und mindestens einen Rahmen (5, 7) aufweist,
sowie mindestens eine Lagervorrichtung (21), mittels welcher mindestens eine der Schwingen (8a, 8b) in dem Rahmen (5, 7) beweglich geführt ist, wobei die Lagervorrichtung (21) eine um eine Lagerachse (16) drehbare Lastrolle (14), welche mit einer ersten Führung zusammenwirkt, und eine um die Lagerachse (16) drehbare Ausgleichsrolle (36), welche mit einer zweiten Führung zusammenwirkt, aufweist,
**dadurch gekennzeichnet, dass**
die zweite Führung für die Ausgleichsrolle (36) an einem Fußbereich (52) eines Einlegers (60) angebracht ist, und
dass ein Seitenbereich (54) des Einlegers (60), welcher sich rechtwinklig zu dem Fußbereich (52) erstreckt, an dem Rahmen (5, 7) befestigt ist, und/oder dass ein Kopfbereich (50) des Einlegers (60), welcher sich parallel zu dem Fußbereich (52) erstreckt, an dem Rahmen (5, 7) befestigt ist, und
dass der Fußbereich (52) elastisch ausgebildet ist und gegen die Ausgleichsrolle (36) drückt.

2. Fahrzeugsitz (1) nach Anspruch 1, **dadurch gekennzeichnet, dass** der Rahmen (5, 7) ein zum Inneren des Fahrzeugsitzes (1) hin offenes C-Profil aufweist, welches einen oberen Schenkel (30), einen parallel zu dem oberen Schenkel (30) verlaufenden unteren Schenkel (32) und einen rechtwinklig zu dem oberen Schenkel (30) verlaufenden Basisschenkel (34), welcher den oberen Schenkel (30) mit dem unteren Schenkel (32) verbindet, umfasst, wobei der Seitenbereich (54) an dem Basisschenkel (34) befestigt ist und/oder der Kopfbereich (50) an dem oberen Schenkel (30) befestigt ist.

3. Fahrzeugsitz (1) nach Anspruch 2, **dadurch gekennzeichnet, dass** der Einleger (60) ein offenes C-Profil aufweist.

4. Fahrzeugsitz (1) nach einem der Ansprüche 2 bis 3, **dadurch gekennzeichnet, dass** der Kopfbereich (50) die erste Führung für die Lastrolle (14) bildet.

5. Fahrzeugsitz (1) nach einem der Ansprüche 2 bis 4, **dadurch gekennzeichnet, dass** der Kopfbereich (50) parallel zu dem oberen Schenkel (30) verläuft und dass der Kopfbereich (50) an dem oberen Schenkel (30) dicht anliegt.

6. Fahrzeugsitz (1) nach einem der Ansprüche 2 bis 5, **dadurch gekennzeichnet, dass** der Fußbereich (52) zumindest weitgehend parallel zu dem unteren Schenkel (32) angeordnet ist, wobei zwischen dem Fußbereich (52) und dem unteren Schenkel (32) ein Spalt vorgesehen ist.

7. Fahrzeugsitz (1) nach einem der vorstehenden Ansprüche, **dadurch gekennzeichnet, dass** der Fußbereich (52) einen ersten Abschnitt (62), der an den Seitenbereich (54) anschließt, und einen zweiten Abschnitt (64), der dem Seitenbereich (54) abgewandt ist, umfasst, wobei der zweite Abschnitt (64) in Form einer Prägestufe ausgebildet ist und parallel versetzt zu dem ersten Abschnitt (62) angeordnet ist.

8. Fahrzeugsitz (1) nach Anspruch 7, **dadurch gekennzeichnet, dass** der zweite Abschnitt (64) die zweite Führung für die Ausgleichsrolle (36) bildet.

9. Fahrzeugsitz (1) nach einem der Ansprüche 1 bis 7, **dadurch gekennzeichnet, dass** eine Auflage (66) auf dem Fußbereich (52) aufgebracht ist, welche die zweite Führung für die Ausgleichsrolle (36) bildet.

10. Fahrzeugsitz (1) nach einem der vorstehenden Ansprüche, **dadurch gekennzeichnet, dass** der Einleger (60) aus Metall, vorzugsweise aus Stahl besteht.

## Claims

1. Vehicle seat (1), in particular utility vehicle seat, comprising a scissors-type stand (3) for adjusting the height, said scissors-type stand having intersected rockers (8a, 8b) and at least one frame (5, 7), and also a bearing device (21) by means of which at least one of the rockers (8a, 8b) is guided movably in the frame (5, 7), wherein the bearing device (21) has a bearing roller (14) which is rotatable about a bearing axis (16) and interacts with a first guide, and a compensating roller (36) which is rotatable about the bearing axis (16) and interacts with a second guide, **characterized in that** the second guide for the compensating roller (36) is attached to a foot region (52) of an insert (60), and **in that** a side region (54) of the insert (60), which side region extends at a right angle to the foot region (52), is fastened to the frame (5, 7), and/or in that a head region (50) of the insert (60), which head region extends parallel to the foot region (52), is fastened to the frame (5, 7), and **in that** the foot region (52) is of elastic design and presses against the compensating roller (36).

2. Vehicle seat (1) according to Claim 1, **characterized in that** the frame (5, 7) has a C-shaped profile which is open toward the interior of the vehicle seat (1) and comprises an upper limb (30), a lower limb (32) running parallel to the upper limb (30) and a base limb (34) which runs at a right angle to the upper limb (30) and connects the upper limb (30) to the lower limb (32), wherein the side region (54) is fastened to the base limb (34), and/or the head region (50) is fastened to the upper limb (30).

3. Vehicle seat (1) according to Claim 2, **characterized in that** the insert (60) has an open C-shaped profile.

4. Vehicle seat (1) according to either of Claims 2 and 3, **characterized in that** the head region (50) forms the first guide for the load roller (14).

5. Vehicle seat (1) according to one of Claims 2 to 4, **characterized in that** the head region (50) runs parallel to the upper limb (30), and **in that** the head region (50) bears tightly against the upper limb (30).

6. Vehicle seat (1) according to one of Claims 2 to 5, **characterized in that** the foot region (52) is arranged at least substantially parallel to the lower limb (32), wherein a gap is provided between the foot region (52) and the lower limb (32).

7. Vehicle seat (1) according to one of the preceding claims, **characterized in that** the foot region (52) comprises a first section (62) which adjoins the side region (54), and a second section (64) which faces away from the side region (54), wherein the second section (64) is designed in the form of an embossed step and is arranged offset parallel to the first section (62).

8. Vehicle seat (1) according to Claim 7, **characterized in that** the second section (64) forms the second guide for the compensating roller (36).

9. Vehicle seat (1) according to one of Claims 1 to 7, **characterized in that** a support (66) which forms the second guide for the compensating roller (36) is mounted on the foot region (52).

10. Vehicle seat (1) according to one of the preceding claims, **characterized in that** the insert (60) is composed of metal, preferably of steel.

## Revendications

1. Siège de véhicule (1), notamment siège de véhicule utilitaire, comprenant un bâti en pantographe (3) servant au réglage en auteur, lequel possède des coulisses croisées (8a, 8b) et au moins un cadre (5, 7),
ainsi qu'au moins un dispositif formant palier (21) au moyen duquel au moins l'une des coulisses (8a, 8b) est guidée en mobilité dans le cadre (5, 7),
le dispositif formant palier (21) possédant un rouleau de charge (14) pouvant tourner autour d'un axe de palier (16) et coopérant avec un premier guide, et un rouleau de compensation (36) pouvant tourner autour de l'axe de palier (16) et coopérant avec un deuxième guide,
**caractérisé en ce que**
le deuxième guide pour le rouleau de compensation (36) est monté au niveau d'une zone de pied (52) d'un élément à introduire (60) et
**en ce qu'**une zone latérale (54) de l'élément à introduire (60), laquelle s'étend perpendiculairement à la zone de pied (52), est fixée au cadre (5,7) et/ou
**en ce qu'**une zone de tête (50) de l'élément à introduire (60), laquelle s'étend parallèlement à la zone de pied (52), est fixée au cadre (5,7) et
**en ce que** la zone de pied (52) est réalisée élastique et exerce une pression contre le rouleau de compensation (36).

2. Siège de véhicule (1) selon la revendication 1, **caractérisé en ce que** le cadre (5, 7) possède un profil en C ouvert vers l'intérieur du siège de véhicule (1), lequel comprend une branche supérieure (30), une branche inférieure (32) qui s'étend parallèlement à la branche supérieure (30) et une branche de base (34) qui s'étend perpendiculairement à la branche supérieure (30) et qui relie la branche supérieure (30) à la branche inférieure (32), la zone latérale (54) étant fixée au niveau de la branche de base (34) et/ou la zone de tête (50) étant fixée à la branche supérieure (30).

3. Siège de véhicule (1) selon la revendication 2, **caractérisé en ce que** l'élément à introduire (60) possède un profil en C ouvert.

4. Siège de véhicule (1) selon l'une des revendications 2 à 3, **caractérisé en ce que** la zone de tête (50) forme le premier guide pour le rouleau de charge (14).

5. Siège de véhicule (1) selon l'une des revendications 2 à 4, **caractérisé en ce que** la zone de tête (50) s'étend parallèlement à la branche supérieure (30) et **en ce que** la zone de tête (50) repose de manière compacte contre la branche supérieure (30).

6. Siège de véhicule (1) selon l'une des revendications 2 à 5, **caractérisé en ce que** la zone de pied (52) est arrangée au moins largement en parallèle avec la branche inférieure (32), un interstice étant prévu entre la zone de pied (52) et la branche inférieure (32).

7. Siège de véhicule (1) selon l'une des revendications précédentes, **caractérisé en ce que** la zone de pied (52) comprend une première portion (62) qui se rattache à la zone latérale (54) et une deuxième portion (64) qui est à l'opposé de la zone latérale (54), la deuxième portion (64) étant réalisée sous la forme d'un palier estampé et étant disposée décalée en parallèle par rapport à la première portion (62).

8. Siège de véhicule (1) selon la revendication 7, **caractérisé en ce que** la deuxième portion (64) forme le deuxième guide pour le rouleau de compensation (36).

9. Siège de véhicule (1) selon l'une des revendications 1 à 7, **caractérisé en ce qu'**un appui (66) est monté sur la zone de pied (52), lequel forme le deuxième guide pour le rouleau de compensation (36).

10. Siège de véhicule (1) selon l'une des revendications précédentes, **caractérisé en ce que** l'élément à introduire (60) est constitué de métal, de préférence d'acier.
